# EUROPEAN PATENT APPLICATION

(11) **EP 1 862 514 A1**
(43) Date of publication of application: **05.12.2007**
(21) Application number: 06714659.7
(22) Date of filing: 21.02.2006
(51) Int. Cl.: C09D 133/00, B05D 7/24, C09D 5/00, C09D 7/12, C09D 163/00, C09D 175/04, C09D 183/04, C09K 3/00

(54) **COATING SOLUTION FOR ANTI-FOGGING TREATMENT AND FOG-RESISTANT PRODUCT**

(30) Priority: 21.02.2005 JP 2005044777
(71) Applicant: SDC Technologies-Asia Ltd., Ichihara-shi, Chiba 2990107 (JP); Nippon Sheet Glass Co., Ltd., Tokyo 105-0022 (JP)
(72) Inventor: TAKAHASHI, Koji, ome, Minato-ku, Tokyo, 1050022 (JP); KAYANOKI, Hisayuki, ome, Minato-ku, Tokyo, 1050022 (JP); MORI, Kenji, ome, Minato-ku, Tokyo, 1050022 (JP)
(74) Representative: Cresswell, Thomas Anthony
(86) International application number: PCT/JP2006/303520
(87) International publication number: WO 2006/088257

(57) **Abstract**

An anti-fogging coating solution comprising a homopolymer of a repeating unit derived from an ethylenic monomer having a hydroxyl group in the side chain or a copolymer of the above repeating unit and a repeating unit derived from an ethylenic monomer having an epoxy group, alkoxycarbonyl group, carboxyl group, amido group or amino group in the side chain as a resin component. A film formed from the coating solution of the present invention has excellent scratch resistance, initial anti-fogging property and anti-fogging retainability.

## Description

### TECHNICAL FIELD

The present invention relates to an anti-fogging coating solution and an anti-fogging article. More specifically, it relates to an anti-fogging article having excellent scratch resistance, initial anti-fogging property, anti-fogging retainability and adhesion and to an anti-fogging coating solution which provides the above anti-fogging article.

### BACKGROUND ART

There are known a large number of technologies for providing anti-fogging property to a substrate. That is, they are known (1) a technology for coating a substrate with a surfactant (refer to JP-B 52-47926), (2) a technology for making the surface of a substrate hydrophilic (refer to JP-B 45-18972 and JP-B 50-1710), (3) a technology for coating the surface of a substrate with a hydrophilic curable resin (refer to JP-A 63-251401), (4) a technology comprising a hydrophilic polymer and a hydrophilic acrylate (refer to JP-A 3-31369), (5) a technology for forming a hydrophilic coating film on a coating film of a crosslinked polyvinyl alcohol (refer to JP-A 6-220428), (6) a technology making use of the photocatalytic function of titanium oxide (refer to JP-A 5-253544), (7) a technology for roughening the surface (refer to JP-A 61-91042), (8) a technology for forming a coating film of a silane compound and a polyvinyl alcohol (refer to JP-A 10-212471), (9) a technology for forming a coating film of a hydrophilic monomer and a non-reactive surfactant (refer to JP-A 3-215589), and (10) a technology for forming a coating film of a resin and a dialkyl succinate (refer to JP-A 9-13015).

However, these prior arts are unsatisfactory in terms of at least one of scratch resistance, initial anti-fogging property, anti-fogging retainability and adhesion, and it cannot be said that the prior arts have all the above properties.

### DISCLOSURE OF THE INVENTION

It is an object of the present invention to provide an anti-fogging coating solution which provides an anti-fogging coating film having excellent scratch resistance, initial anti-fogging property, anti-fogging retainability and adhesion, specifically, to provide the above coating solution having the above properties as a one-can coating solution.

It is another obj ect of the present invention to provide an anti-fogging article having a coating film of the above coating solution of the present invention.

Other objects and advantages of the present invention will become apparent from the following description.

According to the present invention, firstly, the above objects and advantages of the present invention are attained by an anti-fogging coating solution comprising:
a resin component which is a homopolymer of a repeating unit represented by the following formula (1): 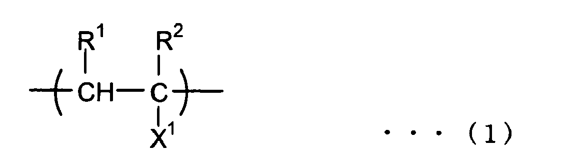 wherein R¹ and R² are each independently a hydrogen atom or alkyl group having 1 to 5 carbon atoms, and X¹ is an aliphatic group having a hydroxyl group, which may be disconnected by an oxygen atom, and/or a copolymer of 70 mol% or more of the repeating unit represented by the above formula (1) and 30 mol% or less of at least one repeating unit selected from the group consisting of repeating units represented by the following formulas (2) to (5) regarding each of the repeating unit represented by the above formula (1) or the following formula (2), (3), (4) or (5) as its 1 mol: 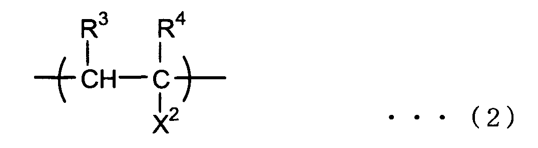 wherein R³ and R⁴ are each independently a hydrogen atom or alkyl group having 1 to 5 carbon atoms, and X² is an aliphatic group having an epoxy group, 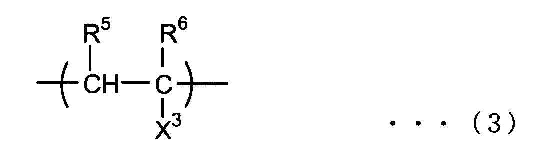 wherein R⁵ and R⁶ are each independently a hydrogen atom or alkyl group having 1 to 5 carbon atoms, and X³ is an alkoxycarbonyl group, alkyl ether group, alkanyl ether group, alkenyl ether group or tetrahydrofurfuryl group, 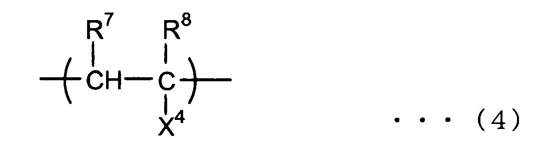 wherein R⁷ and R⁸ are each independently a hydrogen atom or alkyl group having 1 to 5 carbon atoms, and X⁴ is a carboxyl group or aliphatic group having a carboxyl group, 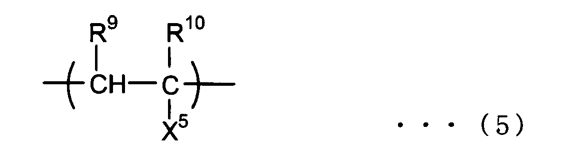 wherein R⁹ and R¹⁰ are each independently a hydrogen atom or alkyl group having 1 to 5 carbon atoms, and X⁵ is an amido group, amino group or aliphatic group having an amido group or amino group; and
at least one crosslinking agent selected from the group consisting of a blocked isocyanate, a polyfunctional organic silicon compound, a compound having at least two epoxy groups in the molecule, a compound having at least two oxetane rings in the molecule, and a compound having at least two different groups selected from epoxy group, silanol group and oxetane ring in the molecule.

According to the present invention, secondly, the above objects and advantages of the present invention are attained by an anti-fogging article having a film obtained by crosslinking a coating film comprising;
a resin component which is a homopolymer of a repeating unit represented by the above formula (1) and/or a copolymer of the repeating unit represented by the above formula (1) and at least one repeating unit selected from the group consisting of repeating units represented by the above formulas (2) to (5) and
at least one crosslinking agent selected from the group consisting of a blocked isocyanate, a polyfunctional organic silicon compound, a compound having at least two epoxy groups in the molecule, a compound having at least two oxetane rings in the molecule, and a compound having at least two different groups selected from epoxy group, silanol group and oxetane ring in the molecule,
wherein the coating film is crosslinked in a state where X¹ is existent in an amount of at least 65 mol% based on the total number of mols of X¹, X², X³, X⁴ and X⁵.

### BEST MODE FOR CARRYING OUT THE INVENTION

The anti-fogging coating solution of the present invention comprises a homopolymer of a repeating unit represented by the above formula (1) and/or a copolymer of 70 mol% or more of the repeating unit represented by the above formula (1) and 30 mol% or less of at least one repeating unit selected from the group consisting of repeating units represented by the above formulas (2) to (5) based on 1 mol of the repeating unit represented by the above formula (1) or the above formula (2), (3), (4) or (5) as a resin component.

In the above formula (1), R¹ and R² are each independently a hydrogen atom or alkyl group having 1 to 5 carbon atoms, and X¹ is an aliphatic group having a hydroxyl group, which may be disconnected by an oxygen atom.

The repeating unit represented by the above formula (1) is derived from a compound represented by the following formula (1'): 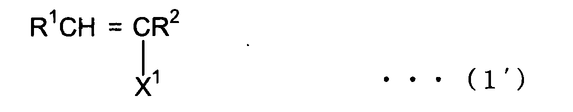 wherein R¹, R² and X¹ are as defined in the above formula (1) .

Examples of the compound include 2-hydroxyethyl (meth)acrylate, 2-hydroxypropyl (meth)acrylate, 1,4-butylene glycol mono(meth)acrylate, glycerol mono(meth)acrylate, hydroxyallyl methacrylate, polyethylene glycol mono(meth)acrylate, polypropylene glycol mono(meth)acrylate, 2-hydroxyethyl vinyl ether, diethylene glycol monovinyl ether and 4-hydroxybutyl vinyl ether.

In the above formula (2), R³ and R⁴ are each independently a hydrogen atom or alkyl group having 1 to 5 carbon atoms, and X² is an aliphatic group having an epoxy group.

The repeating unit represented by the above formula (2) is derived from a compound represented by the following formula (2'): 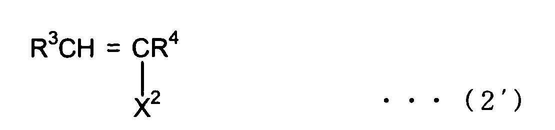 wherein R³, R⁴ and X² are as defined in the above formula (2) .

Examples of the compound include glycidyl (meth)acrylate, β-glycidoxyethyl (meth)acrylate, 3,4-epoxybutyl (meth)acrylate, 4,5-epoxypentyl (meth)acrylate and glycidyl crotonate.

In the above formula (3), R⁵ and R⁶ are each independently a hydrogen atom or alkyl group having 1 to 5 carbon atoms, and X³ is an alkoxycarbonyl group, alkyl ether group, alkanyl ether group, alkenyl ether group or tetrahydrofurfuryl group.

The repeating unit represented by the above formula (3) is derived from a compound represented by the following formula (3'): 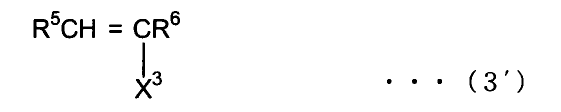 wherein R⁵, R⁶ and X³ are as defined in the above formula (3) .

Examples of the compound.include methyl (meth) acrylate, ethyl (meth)acrylate, tetrahydrofurfuryl (meth)acrylate, methyl vinyl ether and ethyl vinyl ether.

In the above formula (4), R⁷ and R⁸ are each independently a hydrogen atom or alkyl group having 1 to 5 carbon atoms, and X⁴ is a carboxyl group or aliphatic group having a carboxyl group.

The repeating unit represented by the above formula (4) is derived from a compound represented by the following formula (4'): 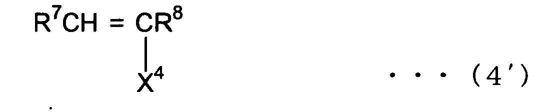 wherein R⁷, R⁸ and X⁴ are as defined in the above formula (4) .

Examples of the compound include (meth)acrylic acid, itaconic acid and crotonic acid.

In the above formula (5), R⁹ and R¹⁰ are each independently a hydrogen atom or alkyl group having 1 to 5 carbon atoms, and X⁵ is an amido group, amino group or aliphatic group having an amido group or amino group. The hydrogen atom bonded to a nitrogen atom contained in the amido group or amino group may be substituted by an alkyl group having 1 to 5 carbon atoms, hydroxyalkyl group or alkoxyalkyl group.

The repeating unit represented by the above formula (5) is derived from a compound represented by the following formula (5'): 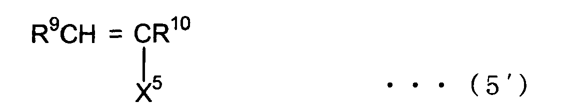 wherein R⁹, R¹⁰ and X⁵ are as defined in the above formula (5).

Examples of the compound include aminomethyl (meth)acrylate, (meth)acrylamide, crotonamide, N-hydroxymethyl (meth)acrylamide, N-(2-hydroxyethyl)(meth)acrylamide, N,N-dihydroxymethyl (meth)acrylamide, N,N-dihydroxyethyl (meth)acrylamide, hydroxymethylaminomethyl (meth)acrylate, 2-hydroxyethylaminomethyl (meth)acrylate, 2-(2-hydroxyethylamino)ethyl (meth)acrylate, N,N-di(2-hydroxymethyl)aminomethyl (meth)acrylate, N,N-di(2-hydoxyethyl)aminomethyl (meth)acrylate, (meth)acrylamide, crotonamide, N-methyl (meth)acrylamide, N-ethyl (meth)acrylamide, N-propyl (meth) acrylamide, N-butyl (meth)acrylamide, N-tert-butyl (meth)acrylamide, N,N-dimethyl (meth)acrylamide, N,N-dipropyl (meth)acrylamide, N,N-dibutyl (meth)acrylamide, N-butoxymethyl (meth)acrylamide, N-iso-butoxymethyl (meth)acrylamide, 2-(N-methylamino)ethyl (meth)acrylate, 2-(ethylamino)ethyl (meth)acrylate, 2-(N,N-dimethylamino)ethyl (meth)acrylate, 2-(N,N-diethylaminoethyl) (meth)acrylate, 2-(N,N-dibutylamino)ethyl (meth)acrylate, 3-(N,N,-dibutylamino)propyl (meth)acrylate, 2-(N,N-dibutylamino)propyl (meth)acrylate and N-methylol acrylamide.

The above homopolymer or copolymer comprises the repeating unit represented by the above formula (1) in an amount of 70 to 100 mol%, more preferably 80 to 95 mol% regarding the repeating unit represented by the above formula (1) as its 1 mol.

The above homopolymer or copolymer has a weight average molecular weight in terms of polystyrene (Mw) measured by gel permeation chromatography (GPC) of preferably 100 to 50,000, more preferably 1,000 to 30,000.

The coating solution of the present invention further comprises a crosslinking agent. The crosslinking agent is selected from a blocked isocyanate, a polyfunctional organic silicon compound having a functionality of 2 or more, a compound having at least two epoxy groups in the molecule, a compound having at least two oxetane rings in the molecule, a compound having at least two different groups selected from epoxy group, silanol group and oxetane group in the molecule, and others.

The blocked isocyanate is preferably an isocyanate having stabilized reactivity by heat obtained by blocking the free isocyanate group of a compound having the biuret structure or an isocyanurate structure of a diisocyanate such as hexamethylene diisocyanate with methanol and ε-caprolactam as blocking agents. Commercially available products of the blocked isocyanate include the Sumidule BL3175, Desmodule BL3475, Desmodule BL3370, Desmodule 3272, Desmodule VPLS2253 and Desmodule TPLS2134 of Sumika Bayer Urethane Co., Ltd. and the Duranate 17B-60PX, Duranate TPA-B80X and Duranate MF-K60X of Asahi Kasei Corporation.

As the polyfunctional organic silicon compound may be used a bifunctional silane, trifunctional silane or tetrafunctional silane which will be described hereinafter as an organic silane compound used to modify the surface of oxide fine particles.

Examples of the compound having at least two epoxy groups in the molecule include ethylene glycol glycidyl ether, glycerol polyglycidyl ether, polyglycidyl ethers obtained from epichlorohydrin and a polyhydric alcohol such as bisphenol A, bisphenol F, ethylene glycol, polyethylene glycol, propylene glycol, glycerin, trimethylolpropane, pentaerythritol and sorbitol, polyglycidyl ethers obtained from epichlorohydrin and a polybasic acid such as phthalic acid and hexahydrophthalic acid, polyglycidyl amines obtained from epichlorohydrin and an amine such as aniline, toluidine, 4,4'-diaminodiphenylmethane and isocyanuric acid, alicyclic epoxy resin such as cyclopentadiene oxide, sorbitol polyglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, 1,6-hexanediol diglycidyl ether, bisphenol A diglycidyl ether, ethylene glycol diglycidyl ether, polyethylene glycol diglycidyl ether, propylene glycol diglycidyl ether, polypropylene glycol diglycidyl ether, polybutadiene diglycidyl ether, diglycidyl o-pentalate, hydroquinone diglycidyl ether, diglycidyl terephthalate, dibromoneopentyl glycol diglycidyl ether, 3,4-epoxycyclohexenylmethyl-3',4'-epoxycyclohexane carboxylate, epoxylated tetrakis(3-cyclohexenyl) butanetetracarboxylate-modified ε-caprolactone 1,2:8,9 diepoxylimonene, and 1,2-epoxy-4-(2-oxiranyl)cyclohexane adduct of 2,2-bis(hydroxymethyl)-1-butanol. Commercially available products of the above compounds include the Denacall EX-612, Denacall EX-512, Denacall EX-421, Denacall EX-314, Denacall EX-321, Denacall EX-211, Denacall EX-252, Denacall EX-810, Denacall EX-850, Denacall EX-821, Denacall EX-830, Denacall EX-841 and Denacall EX-931 of Nagasechemtex Co. , Ltd. and the Ceroxide 2021, Ceroxide 2081, Ceroxide 3000 and Epolide GT401 of Daicel Chemical Industries, Ltd.

Examples of the compound having at least two oxetane rings in the molecule and the compound having at least two different groups selected from epoxy group, silanol group and oxetane ring in the molecule include 1,4-bis{[(3-ethyloxetan-3-yl)methoxy]methyl}benzene, di[1-ethyl(3-oxetanyl)methyl ether, 1,3-bis[(3-ethyloxetan-3-yl)methoxy]benzene, 4,4'-bis[(3-ethyloxetan-3-yl)methoxy]biphenyl, phenol novolak oxetane, 3-ethyl-3-{[3-(triethoxysilyl)propoxy]methyl}oxetane and oxetanyl silsesquioxane. Commercially available products of the compounds include the OXT-221, OXT-610, OX-SQ and PNOX-1009 of Toagosei Co., Ltd. and the Conporasene E102, Conporasene E201 and Conporasene E202 of Arakawa Chemical Industry, Ltd.

Other crosslinking agents include melamines such as hexamethylolmelamine, methylolmelamine and alkyl etherified methylolmelamine.

The amount of the crosslinking agent is preferably 15 parts or less by weight, more preferably 0.5 to 10 parts by weight, more preferably 1.0 to 5.0 parts by weight based on 100 parts by weight of the total of the above homopolymer and copolymer contained in the coating solution of the present invention.

The coating solution of the present invention may optionally contain colloidal silica, a surfactant, a curing catalyst for promoting curing and a leveling agent for improving coatability.

The colloidal silica is available on the market. Examples of the commercially available colloidal silica include chain and branched silicas such as the IPA-ST (particle diameter: 10 to 20 nm, solid content: 30%, isopropanol solvent), methanol silica sol (particle diameter: 10 to 20 nm, solid content: 30%, methanol solvent), NPC-ST-30 (particle diameter: 10 to 20 nm, solid content: 30%, ethylene glycol mono-n-propyl ether solvent), EG-ST (particle diameter: 10 to 20 nm, solid content: 30%, ethylene glycol solvent), ST-OUP (chain silica, particle diameter: 10 to 20 nm, solid content: 15%, water solvent) and IPA-ST-UP (chain silica, particle diameter: 10 to 20 nm, solid content: 15%, isopropanol solvent) of Nissan Chemical Industries, Ltd.

Metal oxide fine particles having a particle diameter of 1 to 100 nm may be used in place of colloidal silica or in combination with colloidal silica.

As for the type of the metal, at least one selected from Al, Sn, Sb, Ta, Ce, La, Fe, Zn, W, Zr, In and Ti is used. Examples of the metal oxide include Al₂O₃, SnO₂ Sb₂O₅ Ta₂O₅, CeO₂, La₂O₃, Fe₂O₃, ZnO, WO₃, ZrO₂ In₂O₃ and TiO₂ . These oxides may be used after their surfaces are modified with an organic silane compound to improve dispersibility into a solvent.

Surface modification with the organic silane compound can be carried out by bringing the oxide fine particles into contact with 20 wt% or less based on the total amount of the oxide fine particles of the organic silane compound in a dispersion medium. The hydrolysis of the organic silane compound may be carried out before or after the above contact.

Examples of the organic silane compound include monofunctional silanes represented by R₃SiX (R is an alkyl group, phenyl group, vinyl group or organic group having a (meth)acryloxy group, mercapto group, amino group or epoxy group, and X is a hydrolyzable group) ; bifunctional silanes represented by R₂SiX₂ (R and X are as defined above) ; trifunctional silanes represented by RSiX₃ (R and X are as defined above); and tetrafunctional silanes represented by SiX₄ (X is as defined above).

In the above formulas, the organic group is preferably an alkyl group having 1 to 4 carbon atoms. The hydrolyzable group is preferably a halogen atom or alkoxy group having 1 to 4 carbon atoms.

Specific examples of the organic silane compound include monofunctional silanes such as trimethylmethoxysilane, triethylmethoxysilane, trimethylethoxysilane, triethylethoxysilane, triphenylmethoxysilane, diphenylmethylmethoxysilane, phenyldimethylmethoxysilane, phenyldimethylethoxysilane, vinyldimethylmethoxysilane, vinyldimethylethoxysilane, γ-acryloxypropyldimethylmethoxysilane, γ-methacryloxypropyldimethylmethoxysilane, γ-mercaptopropyldimethylmethoxysilane, γ-mercaptopropyldimethylethoxysilane, N-β(aminoethyl)γ-aminopropyldimethylmethoxysilane, γ-aminopropyldimethylmethoxysilane, γ-aminopropyldimethylethoxysilane, γ-glycidoxypropyldimethylmethoxysilane, γ-glycidoxypropyldimethoxylethoxysilane and β-(3,4-epoxycyclohexyl)ethyldimethylmethoxysilane; bifunctional silanes such as dimethyldimethoxysilane, diethyldimethoxysilane, dimethyldiethoxysilane, diethyldiethoxysilane, diphenyldimethoxysilane, phenylmethyldimethoxysilane, phenylmethyldiethoxysilane, vinylmethyldimethoxysilane, vinylmethyldiethoxysilane, γ-acryloxypropylmethyldimethoxysilane, γ-methacryloxypropyldimethyldimethoxysilane, γ-mercaptopropylmethyldimethoxysilane, γ-mercaptopropylmethyldiethoxysilane, N-β(aminoethyl)γ-aminopropylmethyldimethoxysilane, γ-aminopropylmethyldimethoxysilane, γ-aminopropylmethyldiethoxysilane, γ-glycidoxypropylmethyldimethoxysilane, γ-glycidoxypropylmethoxyldiethoxysilane and β-(3,4-epoxycyclohexyl)ethylmethyldimethoxysilane; trifunctional silanes such as methyltrimethoxysilane, ethyltrimethoxysilane, methyltriethoxysilane, ethyltriethoxysilane, phenyltimethoxysilane, phenyltriethoxysilane, vinyltrimethoxysilane, vinyltriethoxysilane, vinyl(β-methoxyethoxy)silane, γ-acryloxypropyltrimethoxysilane, γ-methacryloxypropyltrimethoxysilane, γ-mercaptopropyltrimethoxysilane, γ-mercaptopropyltriethoxysilane, N-β(aminoethyl)γ-aminopropyltrimethoxysilane, γ-aminopropyltrimethoxysilane, γ-aminopropyltriethoxysilane, γ-glycidoxypropyltrimethoxysilane, β-glycidoxypropyltrimethoxysilane, γ-glycidoxypropyltriethoxysilane, β-glycidoxypropyltriethoxysilane and β-(3,4-epoxycyclohexyl)ethyltrimethoxysilane; and tetrafunctional silanes such as tetraethyl orthosilicate and tetramethyl orthosilicate.

Examples of the dispersion medium include saturated aliphatic alcohols such as methanol, ethanol, isopropyl alcohol, n-butanol and 2-butanol; cellosolves such as methyl cellosolve, ethyl cellosolve, propyl cellosolve and butyl cellosolve; propylene glycol derivatives such as propylene glycol monomethyl ether, propylene glycol monoethyl ether and propylene glycol monomethyl acetate; esters such as methyl acetate, ethyl acetate and butyl acetate; ethers such as diethyl ether and methyl isobutyl ether; ketones such as acetone and methyl isobutyl ketone; aromatic hydrocarbons such as xylene and toluene; and ethylene glycol, tetrahydrofuran, N,N-dimethylformamide and dichloroethane.

The surfactant is preferably a surfactant having an HLB value which is an index of balance between hydrophilic nature and hydrophobic nature of 10 or more.

Examples of the surfactant having an HLB value of 10 or more include polyoxyethylene alkyl ether, polyoxyethylene alkyl amine and polyoxyethylene alkyl amide surfactants.

These surfactants are available on the market. Commercially available products of these surfactants include polyoxyethylene alkyl ether surfactants such as the Nissan Nonion P-240 (HLB = 17.5), E-212 (HLB = 13.3), E-215 (HLB = 14.2), E-230 (HLB = 16.6), S-211 (HLB = 12.7), S-215 (HLB = 14.2) and S-230 (HLB = 16.5) of NOF Corporation, and the Adecatol LO-7 (HLB = 11.7), LO-9 (HLB = 12.9) and LO-20 (HLB = 16.0) of Asahi Denka Kogyo K.K.; polyoxyethylene alkyl amine surfactants such as the Esomin 0/20 (HLB = 12.5) of Lion Corporation; and polyoxyethylene alkyl amide surfactants such as the Esomide O/15 (HLB = 10.4) and Esomide HT/15 (HLB = 10.4) of Lion Corporation.

The curing agent for promoting curing is preferably added to efficiently promote a curing reaction in which a crosslinking agent acts on components to carry out a crosslinking condensation reaction. Examples of the curing catalyst include alkali metal salts and ammonium salts of a carboxylic acid such as sodium acetate, metal salts and ammonium salts of acetylacetone, metal salts of ethyl acetoacetate, metal salts coordinately bonded to acetylacetone and ethyl acetate, metal salt hydrates of ethylenediamine, primary to tertiary amines, polyalkylamines, sulfonates, organic metal salts such as magnesium perchlorates, ammonium perchlorates, zinc naphthenate and tin octylate, and Lewis acids such as tin tetrachloride, titanium tetrachloride and zinc chloride. These compounds may be used in combination with an organic mercaptan, mercaptoalkylsilane and the like. The curing catalyst should be added in an amount of 0.001 to 10 wt% of the weight after curing.

The leveling agent is preferably added to better the appearance of a coating film by improving the coatability of the coating solution. Examples of the leveling agent include nonionic fluorine-based surfactants and nonionic silicone-based surfactants. Commercially available products of the leveling agent include the Megafac F-472SF, Megafac F-443 and Megafac F-1405 of Dainippon Ink and Chemicals, Inc., the Unidyne NS-1605, Unidyne NS-2107 and Unidyne DS-451 of Daikin Industries, Ltd. (the above leveling agents contain fluorine), and the L-77, L-7001, L-7002, FZ-2104, FZ-2105, FZ-2108, FZ-2161 and FZ-2163 of Nippon Unicar Co., Ltd. (the above leveling agents contain silicone).

The above anti-fogging coating solution of the present invention may comprise preferably 0 to 150 parts by weight, more preferably 10 to 125 parts by weight of the oxide fine particles such as colloidal silica and preferably 0 to 80 parts by weight, more preferably 10 to 70 parts by weight of the surfactant based on 100 parts by weight of the above resin component.

The above coating solution generally comprises a solvent. The preferred solid content of the coating solution differs according to coating technique. When the coating solution is applied by dipping or spraying, the solid content is preferably 5 to 20 wt%, when the coating solution is applied by spin coating, the solid content is preferably 15 to 35 wt%, when the coating solution is applied by roll coating or gravure coating, the solid content is preferably 20 to 50 wt%, and when the coating solution is applied by screen printing, the solid content is preferably 20 to 80 wt%.

The solvent may be identical to the above solvent described as the dispersion medium used to modify the surfaces of the oxide fine particles.

The anti-fogging coating solution of the present invention is directly applied to a substrate or a substrate which has been coated with a functional film such as a primer or hard coat or subjected to an electric treatment such as corona treatment or plasma treatment, and then the solvent is removed to form a coating film. The substrate is preferably a transparent substrate. The substrate is a glass, polycarbonate resin or acrylic resin substrate, for example, an anti-reflection spectacle lens substrate. More specifically, optical lenses such as spectacles lenses have a multi-layer anti-reflection film, for example, a multi-layer anti-reflection film comprising an SiO₂ layer as the outermost layer in most cases. When a coating film of the anti-fogging coating solution of the present invention having a thickness of 20 nm or less is formed on this multi-layer anti-reflection film, anti-fogging property can be provided while anti-reflection performance is maintained. Similarly, anti-fogging property can be provided to the inner side of a car window glass, the inner side of safety glasses, the inner side of the helmet shield of a motorcycle, the mirror surface of a washroom vanity and other mirror surfaces.

The solvent is then removed from the coating film after application. As for the temperature for removing the solvent, the ambient temperature is preferably 15 to 300°C, more preferably 40 to 200°C. The time of the solvent removing step is preferably 1 second to 24 hours, more preferably 10 seconds to 5 hours.

The thickness of the coating film of the coating solution of the present invention after the removal of the solvent which differs according to the type of the substrate and its application purpose can be, for example, 30 µm or more because anti-fogging property becomes higher as the film thickness increases and transparency can be maintained even when the film is thick. It is generally 10 µm or less, preferably 10 nm to 10 µm.

The coating film formed from the coating solution of the present invention on the surface of an article comprises a homopolymer of a repeating unit represented by the above formula (1) and/or a copolymer of the repeating unit represented by the above formula (1) and at least one repeating unit selected from the group consisting of repeating units represented by the above formulas (2) to (5) as a resin component in a crosslinked state, wherein X¹ is existent in an amount of preferably at least 65 mol%, more preferably 65 to 95 mol% based on the total number of mols of X¹, X², X³, X⁴ and X⁵.

The coating film formed from the coating solution of the present invention is crosslinked to form a coating film having excellent scratch resistance. The amount of the residual hydroxyl group in the repeating unit represented by the above formula (1) affects the anti-fogging properties of the coating film, and the amount of the residual hydroxyl group is preferably at least 65 mol% as described above. To enable the coating film to maintain sufficiently high scratch resistance, a crosslinking reaction is preferably carried out to reduce the above amount of the hydroxyl group by 0 to 25 mol%, especially about 5 mol%.

The above crosslinking reaction may be carried out by heating the coating film at an ambient temperature of preferably 40 to 300°C, more preferably 60 to 200°C for preferably 1 second to 24 hours, more preferably 10 seconds to 5 hours.

The following examples are provided for the purpose of further illustrating the present invention but are in no way to be taken as limiting.

As described above, the anti-fogging coating solution of the present invention provides a coating film having a hydroxyl group based on the resin component in the structure and excellent initial anti-fogging property and anti-fogging retainability even when the coating film is made thin. An anti-fogging coating solution comprising a surfactant having a large HLB value provides more excellent initial anti-fogging property and anti-fogging retainability because the amount of the eluting surfactant is small. Further, an anti-fogging coating solution comprising oxide fine particles such as colloidal silica provides excellent scratch resistance, an anti-fogging coating solution comprising an organic silicon compound as a crosslinking agent provides stable adhesion to an inorganic base (substrate), and an anti-fogging coating solution comprising a blocked isocyanate has long-term one-can stability.

### Examples

### 1. Synthesis of resin component

The resin component for developing anti-fogging property was prepared as follows. In the following description, the molecular weight of the resin component is a weight average molecular weight in terms of polystyrene measured by GPC.

### <anti-fogging resin 1>

72 parts by weight of 2-hydroxyethyl methacrylate, 12 parts by weight of 2-(N,N-dimethylamino)ethyl methacrylate and 16 parts by weight of methyl methacrylate were added to 320 parts by weight of ethyl cellosolve and heated at 90°C in a nitrogen atmosphere under agitation for 4 hours to be copolymerized.

The obtained copolymer was a copolymer of 2-hydroxyethyl methacrylate, dimethylaminoethyl methacrylate and methyl methacrylate having a molecular weight of about 10,000.

### <anti-fogging resin 2>

94 parts by weight of 2-hydroxyethyl methacrylate and 6 parts by weight of 2- (N,N-dimethylamino) ethyl methacrylate were added to 320 parts by weight of ethyl cellosolve, 0.4 part by weight of azobisisobutyronitrile was further added, and they were heated at 90°C in a nitrogen atmosphere under agitation for 4 hours to be copolymerized.

The obtained copolymer was a copolymer of 2-hydroxyethyl methacrylate and dimethylaminoethyl methacrylate having a molecular weight of about 10,000.

### <anti-fogging resin 3>

100 parts by weight of 2-hydroxyethyl methacrylate was added to 320 parts by weight of ethyl cellosolve, 0.4 part by weight of azobisisobutyronitrile was further added, and they were heated at 90°C in a nitrogen atmosphere under agitation for 4 hours to be copolymerized.

The obtained copolymer was a homopolymer of 2-hydroxyethyl methacrylate having a molecular weight of about 10,000.

### <anti-fogging resin 4>

88 parts by weight of 2-hydroxyethyl methacrylate and 12 parts by weight of acrylamide were added to 320 parts by weight of ethyl cellosolve, 0.4 part by weight of azobisisobutyronitrile was further added, and they were heated at 90°C in a nitrogen atmosphere under agitation for 4 hours to be copolymerized.

The obtained copolymer was a copolymer of 2-hydroxyethyl methacrylate and acrylamide having a molecular weight of about 10,000.

### <anti-fogging resin 5>

89 parts by weight of 2-hydroxyethyl methacrylate and 11 parts by weight of glycidyl methacrylate were added to 320 parts by weight of ethyl cellosolve, 0.4 part by weight of azobisisobutyronitrile was further added, and they were heated at 90°C in a nitrogen atmosphere under agitation for 4 hours to be copolymerized.

The obtained copolymer was a copolymer of 2-hydroxyethyl methacrylate and glycidyl methacrylate having a molecular weight of about 10,000.

### <anti-fogging resin 6>

84 parts by weight of 2-hydroxyethyl methacrylate and 16 parts by weight of acrylic acid were added to 320 parts by weight of ethyl cellosolve, 0.4 part by weight of azobisisobutyronitrile was further added, and they were heated at 90°C in a nitrogen atmosphere under agitation for 4 hours to be copolymerized.

The obtained copolymer was a copolymer of 2-hydroxyethyl methacrylate and acrylic acid having a molecular weight of about 10,000.

### <anti-fogging resin 7>

71 parts by weight of 2-hydroxyethyl methacrylate and 29 parts by weight of methyl methacrylate were added to 320 parts by weight of ethyl cellosolve, 0.4 part by weight of azobisisobutyronitrile was further added, and they were heated at 90°C in a nitrogen atmosphere under agitation for 4 hours to be copolymerized.

The obtained copolymer was a copolymer of 2-hydroxymethyl methacrylate and methyl methacrylate having a molecular weight of about 10,000.

### 2. preparation of coating solution

### <coating solution 1/formulation>

anti-fogging resin 1 (solid content: 24 wt%): 80 parts by weight
γ-glycidoxypropyltrimethoxysilane: 1 part by weight
methyltrimethoxysilane: 1 part by weight
polyoxyethylene alkyl ether surfactant: 2 parts by weight
nonionic fluorine-based leveling agent: 0.1 part by weight

### <coating solution 2/formulation>

anti-fogging resin 2 (solid content: 24 wt%): 80 parts by weight
methyltrimethoxysilane: 1 part by weight
BL3175 (solid content: 75 wt%): 1 part by weight
IPA-ST-UP (solid content: 15 wt%): 50 parts by weight
Polyoxyethylene alkyl amide surfactant: 2 parts by weight
Nonionic silicone-based leveling agent: 0.1 part by weight

### <coating solution 3/formulation>

anti-fogging resin 3 (solid content: 24 wt%): 80 parts by weight
BL3175 (solid content: 75 wt%): 2 parts by weight
IPA-ST-UP (solid content: 15 wt%): 15 parts by weight
Polyoxyethylene alkyl ether surfactant: 4 parts by weight Nonionic silicone-based leveling agent: 0.1 part by weight

### <coating solution 4/formulation>

anti-fogging resin 3 (solid content: 24 wt%): 80 parts by weight
BL3175 (solid content: 75 wt%): 2 part by weight
NPC-ST-30 (solid content: 30 wt%): 32 parts by weight
Polyoxyethylene alkyl amide surfactant: 4 parts by weight Nonionic silicone-based leveling agent: 0.1 part by weight

### <coating solution 5/formulation>

anti-fogging resin 3 (solid content: 24 wt%): 80 parts by weight
methyltrimethoxysilane: 2 parts by weight
Nonionic silicone-based leveling agent: 0.1 part by weight

### <coating solution 6/formulation>

anti-fogging resin 4 (solid content: 24 wt%): 80 parts by weight
Duranate TPA-B80X: 2 parts by weight
Nonionic silicone-based leveling agent: 0.1 part by weight

### <coating solution 7/formulation>

anti-fogging resin 5 (solid content: 24 wt%): 80 parts by weight
BL3175: 2 parts by weight
Polyoxyethylene alkyl ether surfactant: 2 parts by weight
Nonionic silicone-based leveling agent: 0.1 part by weight

### <coating solution 8/formulation>

anti-fogging resin 6 (solid content: 24 wt%): 80 parts by weight
BL3175: 2 parts by weight
Polyoxyethylene alkyl ether surfactant: 2 parts by weight Nonionic fluorine-based leveling agent: 0.1 part by weight

### <coating solution 9/formulation>

anti-fogging resin 2 (solid content: 24 wt%): 80 parts by weight
BL3175 (solid content: 75 wt%): 2 parts by weight
hexamethylolmelamine: 0.5 part by weight
polyoxyethylene alkyl ether surfactant: 2 parts by weight Nonionic silicone-based leveling agent: 0.1 part by weight

### <coating solution 10/prepration table>

anti-fogging resin 2 (solid content: 24 wt%): 80 parts by weight
BL3175 (solid content: 75 wt%): 4 parts by weight
NPC-ST-30 (solid content: 30 wt%): 80 parts by weight
Polyoxyethylene alkyl ether surfactant: 12 parts by weight Nonionic silicone-based leveling agent: 0.1 part by weight

### <coating solution 11/formulation>

anti-fogging resin 3 (solid content: 24 wt%): 80 parts by weight
γ-glycidoxypropyltrimethoxysilane: 1 part by weight
3-ethyl-3-{[3-(triethoxysilyl)propoxy]methyl}oxetane: 1 part by weight
Polyoxyethylene alkyl amide surfactant: 2 parts by weight
Nonionic silicone-based leveling agent: 0.1 part by weight

### <coating solution 12/prepration table>

anti-fogging resin 2 (solid content: 24 wto): 80 parts by weight
methyltrimethoxysilane: 1 part by weight
polyethylene glycol diglycidyl ether: 1 part by weight
IPA-ST-UP (solid content: 15 wt%): 50 parts by weight
Polyoxyethylene alkyl ether surfactant: 2 parts by weight
Nonionic silicone-based leveling agent: 0.1 part by weight

### <coating solution 13/formulation>

anti-fogging resin 2 (solid content: 24 wt%): 80 parts by weight
methyltrimethoxysilane: 2 parts by weight
3,4-epoxycyclohexenylmethyl-3',4'-epoxycyclohexene
carboxylate: 1 part by weight
NPC-ST-30 (solid content: 30 wt%): 40 parts by weight
Polyoxyethylene alkyl amide surfactant: 2 parts by weight Nonionic silicone-based leveling agent: 0.1 part by weight

### <coating solution 14/prepration table>

anti-fogging resin 7 (solid content: 24 wt%): 80 parts by weight
methyltrimethoxysilane: 1 part by weight
Sumidule BL3175 (solid content: 75 wt%): 1 part by weight
IPA-ST-UP (solid content: 15 wt%): 50 parts by weight
Polyoxyethylene alkyl amide surfactant: 2 parts by weight
Nonionic silicone-based leveling agent: 0.1 part by weight

The above coating solutions were prepared by mixing and stirring together the above components uniformly according to the above formulations.

### 3. evaluation methods

### 1) initial anti-fogging property

An article having a film obtained by applying each of the above coating solutions to one side of a substrate and crosslinking it was placed on 50°C hot water in a chamber having a temperature of 20°C and a humidity of 50%RH to check if the processed surface was fogged or not.

### 2) anti-fogging retainability

After the film was left in a 30°C-60%RH thermo-hygrostat for 2 weeks, its anti-fogging property was evaluated. Anti-fogging property was evaluated in the same manner as initial anti-fogging property.

### 3) scratch resistance/dry cloth

The surface of the film was rubbed 100 times with dry Bencot (manufactured by Asahi Chemical Industry Co., Ltd.) under a load of 500 g/cm². The scratching of the surface was checked.
1: not scratched
2: a few scratches are seen
3: a large number of scratches are seen
4: film peels off

### 4) scratch resistance/wet cloth

The surface of the film was rubbed 100 times with a laminate of 8 Bencot sheets impregnated with 1 cc/cm² of water under a load of 500 g/cm². The scratching of the surface was checked.
1: not scratched
2: a few scratches are seen
3: a large number of scratches are seen
4: film peels off

### 5) scratch resistance/ethanol

The surface of the film was rubbed 100 times with a laminate of 8 Bencot sheets impregnated with 1 cc/cm² of ethanol under a load of 500 g/cm². The scratching of the surface was checked.
1: not scratched
2: a few scratches are seen
3: a large number of scratches are seen
4: film peels off

### 6) anti-fogging water resistance

After the film was immersed in running water for 1 minute, water was removed from the surface and the film was left at room temperature for 1 hour, the anti-fogging property of the film was evaluated.

### 7) transparency

The haze value of the coated article was measured with a haze meter.
Color difference turbidity meter: 300A (of Nippon Denshoku Kogyo Co., Ltd.)

### 8) film thickness

This was measured with a surface roughness meter (Surfcom 110B (of Tokyo Seimitsu Co., Ltd.)).

### Examples 1 to 19 and Comparative Examples 1 to 5

Each of the coating solutions prepared to have a solid content of 15 to 35 wt% based on the above formulations was applied to one side of a substrate shown in Table 1 by spin coating and heated at 60°C for 10 minutes to remove the solvent and further heated at 120°C in the air for 30 minutes to carry out a crosslinking reaction. An article having the obtained crosslinked film was evaluated by the above evaluation methods. The results are shown in Table 1. The amount of the residual hydroxyl group after the crosslinking reaction is shown in Table 1 as a ratio (mol%) based on the total number of mols of X¹, X², X³, X⁴ and X⁵. This value was calculated from the residual ratio of the hydroxyl group before and after the crosslinking reaction and the copolymerization ratio of monomers in the polymer. The residual ratio of the hydroxyl group was obtained as follows by infrared absorption analysis (FT-IR). First, each coating solution was applied to a silicon wafer and heated at 60°C for 10 minutes to remove the solvent so as to obtain a sample before crosslinking. The absorption strength at 3,600 to 2,500 cm⁻¹ (characteristic absorption band derived from the expansion/contraction movement of the hydroxyl group) and 1,400 to 1,500 cm⁻¹ (characteristic absorption band derived from the bending movement of the hydroxyl group) of this sample was measured 100 times with the JIR-5500 Fourier transformation infrared spectrophotometer of JEOL Ltd. in accordance with a transmission method. Similarly, the absorption strength at the above absorption bands of a silicon water having no film was measured. A calibration curve was drawn based on the condition that the residual ratio of the hydroxyl group of the sample before crosslinking was 100% and that of the silicon wafer was blank (the residual ratio of the hydroxyl group was 0%) . Then, the sample before crosslinking was heated at 120°C in the air for 30 minutes to carry out a crosslinking reaction to obtain a crosslinked sample, and the absorption strength at the above absorption bands of the crosslinked sample was measured similarly and applied to the above calibration curve so as to obtain the residual ratio of the hydroxyl group.

The coating solutions 2', 3', 5' and 9' used in Comparative Examples 1 to 4 correspond to the solutions of which the blocked isocyanate and the organic silicon compound as the crosslinknig agents were removed from the coating solutions 2, 3, 5 and 9, respectively.

The glass sheet as the substrate was the Clear Glass (thickness of 2 mm) of Nippon Sheet Glass Co., Ltd., the polycarbonate resin sheet was the Polyca Ace ECK-100 (thickness of 2 mm) of Tsutsunaka Plastic Industry Co., Ltd., and the acrylic resin sheet was the Acrylite E Sheet (thickness of 2 mm) of Mitsubishi Rayon Co., Ltd. In Example 16, the HOYA HYLUX multi-processed lens of HOYA Corporation was used as a substrate.

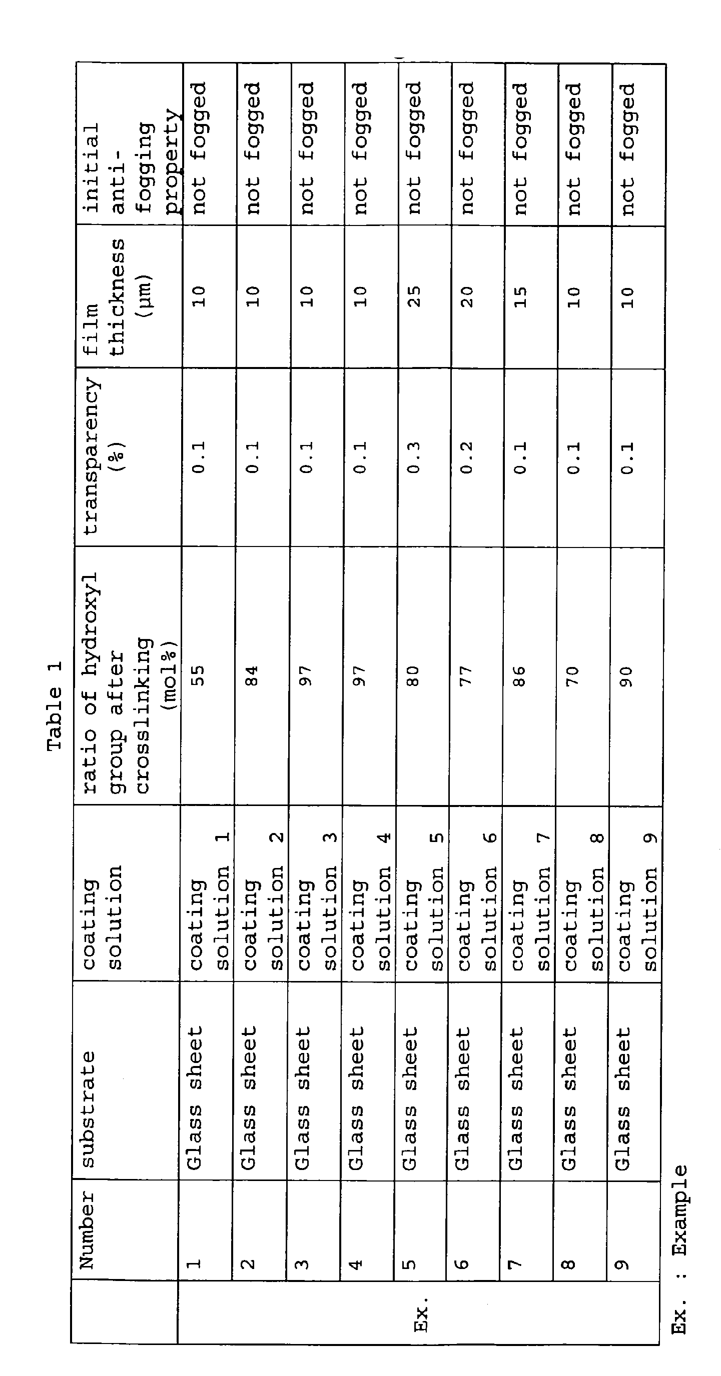

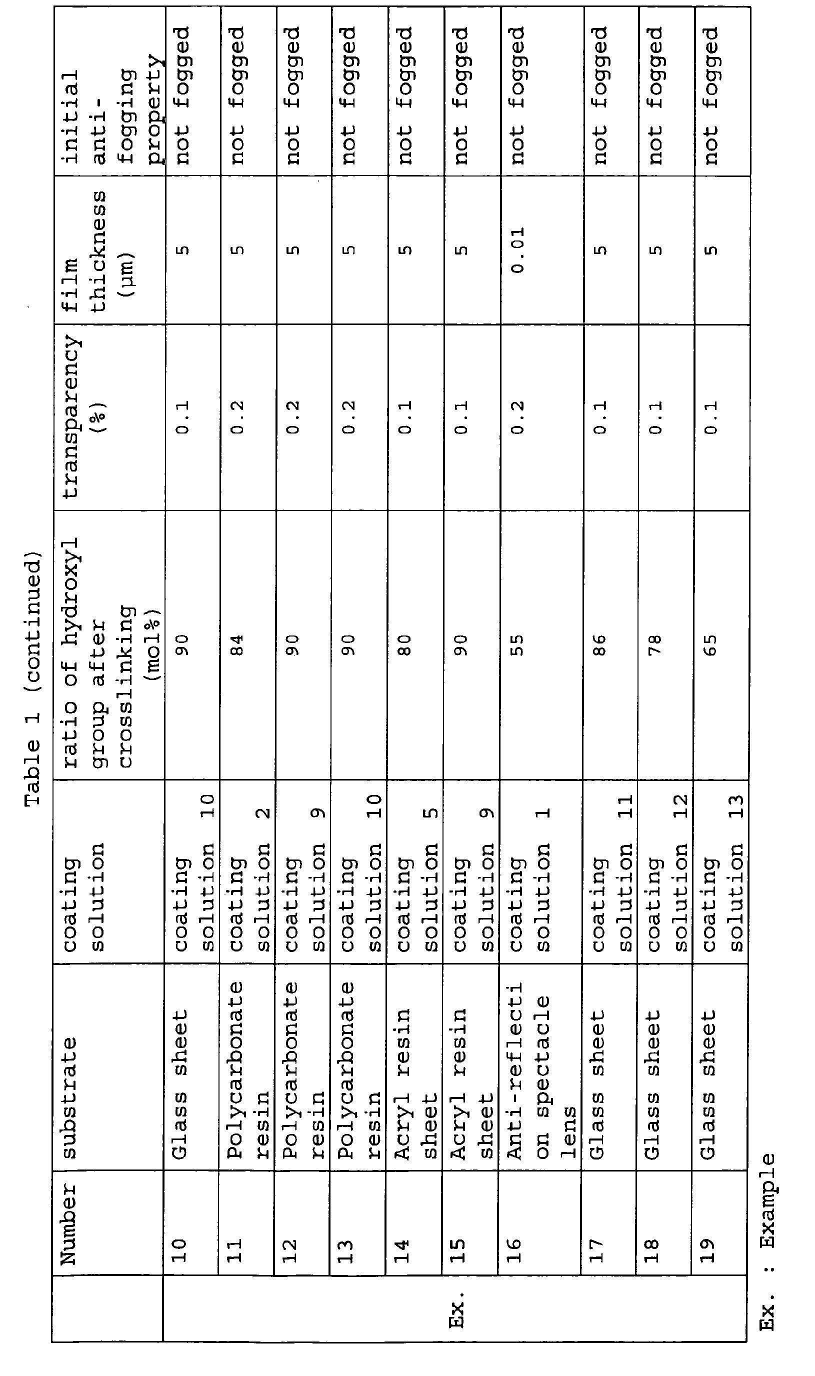

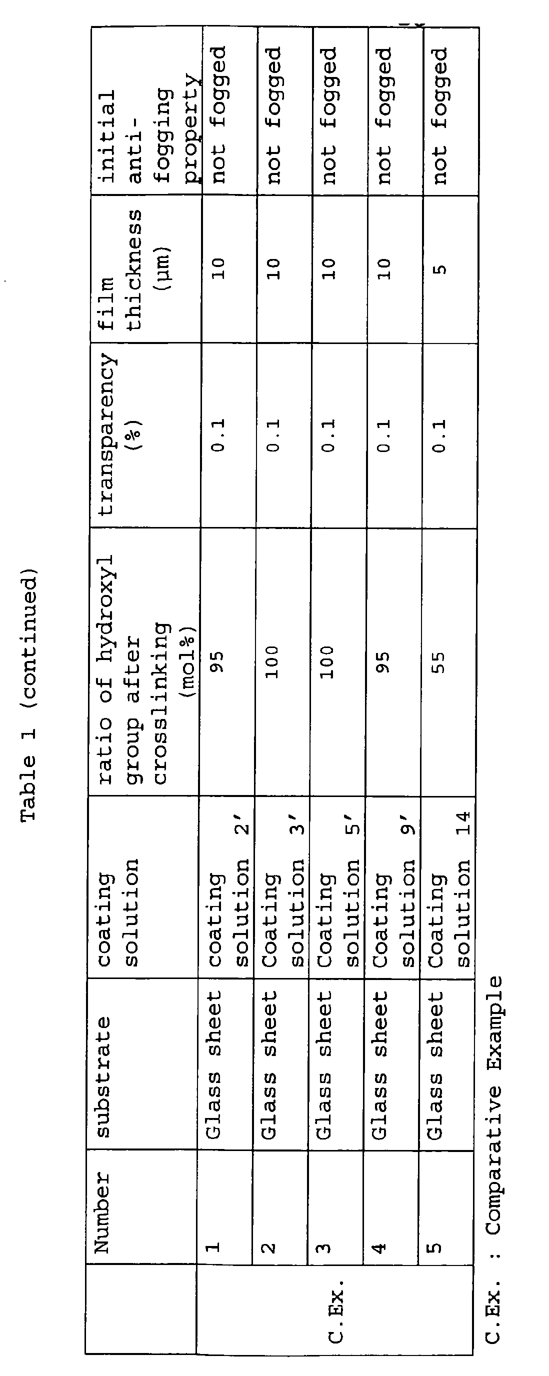

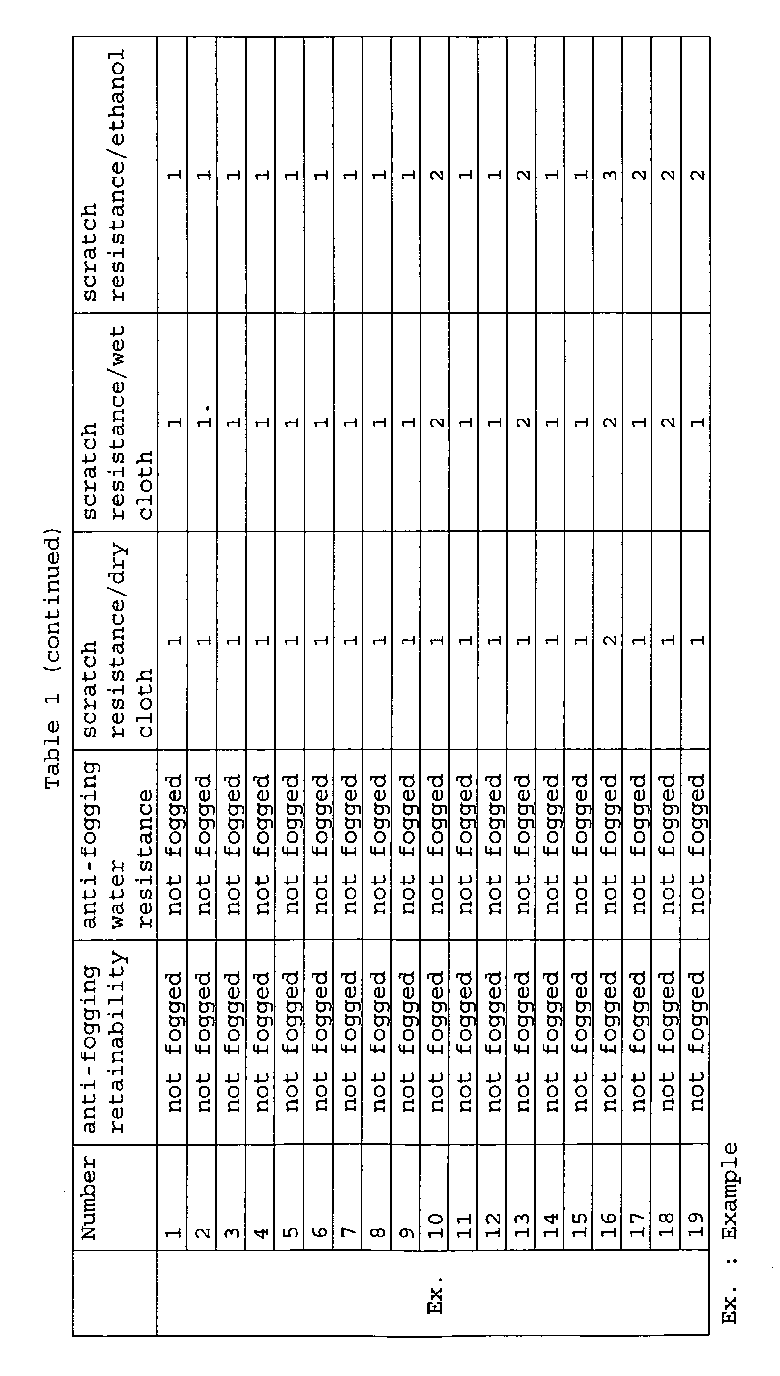

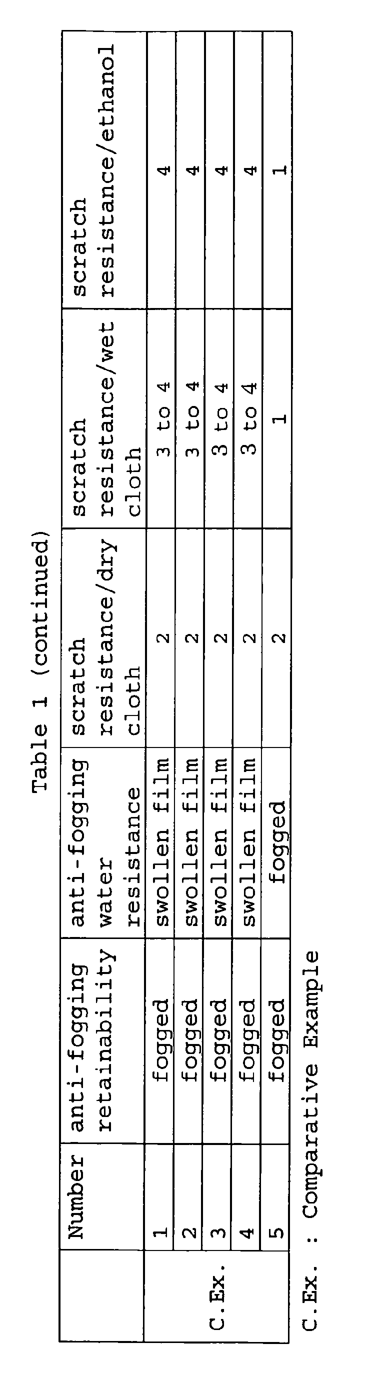

## Claims

1. An anti-fogging coating solution comprising:
a resin component which is a homopolymer of a repeating unit represented by the following formula (1): 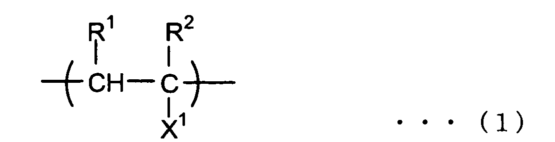
wherein R¹ and R² are each independently a hydrogen atom or alkyl group having 1 to 5 carbon atoms, and X¹ is an aliphatic group having a hydroxyl group, which may be disconnected by an oxygen atom,
and/or a copolymer of 70 mol% or more of the repeating unit represented by the above formula (1) and 30 mol% or less of at least one repeating unit selected from the group consisting of repeating units represented by the following formulas (2) to (5) regarding each of the repeating unit represented by the above formula (1) or the following formula (2), (3), (4) or (5) as its 1 mol: 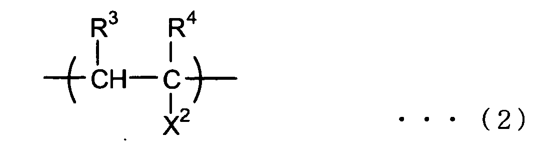 wherein R³ and R⁴ are each independently a hydrogen atom or alkyl group having 1 to 5 carbon atoms, and X² is an aliphatic group having an epoxy group, 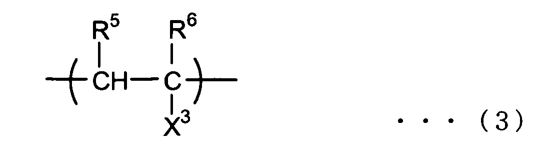 wherein R⁵ and R⁶ are each independently a hydrogen atom or alkyl group having 1 to 5 carbon atoms, and X³ is an alkoxycarbonyl group, alkyl ether group, alkanyl ether group, alkenyl ether group or tetrahydrofurfuryl group, 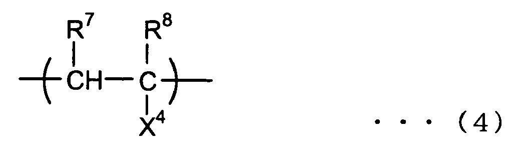 wherein R⁷ and R⁸ are each independently a hydrogen atom or alkyl group having 1 to 5 carbon atoms, and X⁴ is a carboxyl group or aliphatic group having a carboxyl group, 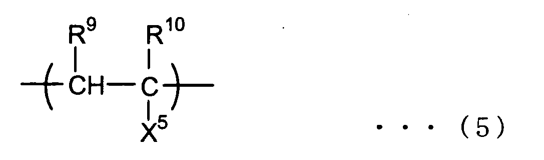 wherein R⁹ and R¹⁰ are each independently a hydrogen atom or alkyl group having 1 to 5 carbon atoms, and X⁵ is an amido group, amino group or aliphatic group having an amido group or amino group; and
at least one crosslinking agent selected from the group consisting of a blocked isocyanate, a polyfunctional organic silicon compound, a compound having at least two epoxy groups in the molecule, a compound having at least two oxetane rings in the molecule, and a compound having at least two different groups selected from epoxy group, silanol group and oxetane ring in the molecule.

2. The anti-fogging coating solution according to claim 1 which further comprises colloidal silica.

3. The anti-fogging coating solution according to claim 1 which further comprises a surfactant.

4. The anti-fogging coating solution according to claim 3, wherein the HLB value of the surfactant is 10 or more.

5. The anti-fogging coating solution according to claim 3, wherein the surfactant is at least one selected from polyoxyethylene alkyl ether, polyoxyethylene alkyl amine and polyoxyethylene alkyl amide surfactants.

6. The anti-fogging coating solution according to claim 1 which further comprises a crosslinking agent different from the above crosslinking agent.

7. An anti-fogging article having a film obtained by crosslinking a coating film comprising ;
a resin component which is a homopolymer of a repeating unit represented by the above formula (1) and/or a copolymer of the repeating unit represented by the above formula (1) and at least one repeating unit selected from the group consisting of repeating units represented by the above formulas (2) to (5) and
at least one crosslinking agent selected from the group consisting of a blocked isocyanate, a polyfunctional organic silicon compound, a compound having at least two epoxy groups in the molecule, a compound having at least two oxetane rings in the molecule, and a compound having at least two different groups selected from epoxy group, silanol group and oxetane ring in the molecule,
wherein the coating film is crosslinked in a state where X¹ is existent in an amount of at least 65 mol% based on the total number of mols of X¹, X², X³, X⁴ and X⁵.
